# EUROPEAN PATENT APPLICATION

(11) **EP 1 868 315 A1**
(43) Date of publication of application: **19.12.2007**
(21) Application number: 06115548.7
(22) Date of filing: 15.06.2006
(51) Int. Cl.: H04L 9/32, G06Q 20/00

(54) **Cryptographic computer-implemented method for processing a digital signature and information processing apparatus therefor.**

(71) Applicant: Sealed SPRL, 7500 Tournai (BE)
(72) Inventor: Delos, Olivier, 1470, Genappe (BE); Lacroix, Sylvie, 7500, Tournai (BE)
(74) Representative: Van Straaten, Joop

(57) **Abstract**

The invention relates to a cryptographic computer-implemented method for processing a digital signature (2), including adding (102) to a signature (2) of a signer claimed roles (10) or delegated powers. The method further includes adding to the signature (2), for each claimed role (10) and delegated power, a reference to a role-stamping authority (24) being capable of confirming the validity of the signer corresponding claimed role (10) or delegated power; sending (104, 105), to a role stamping authority (24), the identity data (8) of the signature (2), and one claimed role (10) or delegated power; and receiving (112, 113), from the role stamping authority (24), either a signed role-stamp token (14) confirming the validity of the claimed role (10) or delegated power and including a time indication associated with the confirmation, or a failure signal indicating that the claimed role (10) or delegated power is not confirmed.

## Description

### Field of the invention

The invention relates to a cryptographic computer-implemented method for processing a digital signature, including the step of adding to a digital signature of digital information, wherein the signature is signed by a natural person or legal entity, i.e. the signer, and includes identity data corresponding to the signer identity, at least one claimed role or delegated power of the signer.

The identity data is a unique number or a set of data enabling to precisely identify who a signing natural person is or which signing legal entity is referred to.

The role of a signer is an attribute or characteristic of the natural person or legal entity. The role is different from the identity and complements the identity. The role may for instance be a capacity, a function or a qualification, and it may for instance be a professional, business, cultural, associational, sportive or affiliation-like role. A signer may have no role, one role or several roles but has always one and only one identity. Several signers may have the same role or roles but two signers cannot have the same identity.

A delegated power is a capacity to act on behalf of another natural person or legal entity before an authority or in specific transactions. A delegated power is similar to a role within the context of the invention.

The invention also relates to a cryptographic information processing apparatus for processing a digital signature, including adding means for adding to a digital signature of digital information, wherein the signature is signed by a natural person or legal entity, i.e. the signer, and includes identity data corresponding to the signer identity, at least one claimed role or delegated power of the signer.

### Description of prior art

Such methods and systems are known in the art.

Within the framework of computer-implemented cryptography, the general purpose of digitally signing data to be sent over an insecure network is to ensure communication confidentiality, data integrity and authentication of the sender. The authentication is the process of establishing or checking that a claim about something or somebody is true. It may for instance be a claimed identity or role. The authentication process may be followed by an authorisation process, i.e. a process of granting a right to perform a defined operation or to access a specific service or resource.

As well-known in the art, digitally signing data may for instance involve providing a public key infrastructure (PKI) for binding public keys to senders, i.e. users. PKI schemes typically include trusted third parties called Certificate Authorities (CA) which issue public key certificates.

Digital signatures are typically standardized, for instance according to ETSI TS 101 733 (CAdES) or ETSI TS 101 903 (XAdES) standards, available from the European Telecommunications Standards Institute (ETSI).

The identity credentials contained in the public key certificate may be classic identity elements of natural persons, such as those included on official paper-based identity documents issued by official national authorities, such as identity cards or passports. Additional elements, i.e. roles, such as professional qualifications, and positions or functions within an organisation or company, may be part of the certified identity credentials. There is indeed a need to certify, not only the identity of a natural person or legal entity, but also their role and delegated powers.

However the period during which the roles and delegated powers are genuinely associated to the natural person or legal entity identity is usually much shorter than the life time of the identity. Amendments or invalidation of such associations result in the revocation of the certificate and requires the generation of a new certificate and potentially new key pair for the user. This is time consuming, costly and may be open to fraud during the critical period surrounding a revocation.

Electronic identity cards (eID) include citizen identity. The eIDs' PKI functionalities enable citizens to benefit from strong authentication, electronic signature and sometimes encryption facilities based on card hosted key pair(s).

Business actors are keen to benefit from such security tools in order to secure business processes, electronic communications and transactions as well as controlling access to resources and services. However the business-specific identity attributes are missing from the citizen-identity based eID cards or the like and additional measures need to be implemented.

Known methods include the possibility of including a claimed role or a certified role within the body of the digital signature.

For example, the XML Advanced Electronic Signatures (XAdES) standard (ETSI TS 101 903 V1.3.2 (2006-03)) provides the possibility of claiming or certifying a role in the "SignerRole" element (see above-mentioned document, section 7.2.8, page 39). This element can contain claimed roles or certified roles added by the signer when creating the signature.

The "Electronic Signatures and Infrastructures (ESI); CMS Advanced Electronic Signatures (CAdES)" standard (ETSI TS 101 733 V1.6.3 (2005-09)) standard provides a similar scheme for claiming or certifying roles (see above-mentioned document, section 5.11.3, "Signer attributes attribute", page 29 and 30).

The prior art claimed role scheme may be described as follows. The signer identity, identifying the signer with a unique key, and a signer role, as a signer's claimed role, are provided in one type of standardized digital signature. The claimed role, which may use existing signed attributes as "signer's claimed role" field, indicates the context wherein the signature takes place. The solution is easy to implement but does not provide any formal guarantee to the verifier about the role or business characteristic claimed by the signer. The context helps to prove the claimed role but the formal proof usually tends to be difficult to obtain.

The prior art certified role scheme may be described as follows. An attribute certificate, as specified for instance by RFC 3281 or RFC 4476, which contains a certified role, or alternatively a reference to an attribute certificate is included in a standardized signed attribute field. The attribute certificate certifies that a signed role is genuinely associated to a signer identity, in the same manner as the identity certificate certifies that a signer identity is genuinely associated to a signer.

Attribute certificate based schemes are however relatively difficult to implement since they require a costly life cycle management and an infrastructure for handling requests for such certificates and for issuing, publishing, suspending and revoking such attribute certificates. Attribute certificates are not issued by a Certificate Authority (CA) but by an Attribute Authority. The Attribute Authority is usually controlled by the organisation or company entitled to know and guarantee which attribute is genuinely associated with an individual. The Attribute Authority may for instance use or point to the public key certificates issued by a trusted CA. Attribute certificates may have various periods of validity, for instance ranging from one hour to several years, and they need to be renewed.

The prior art methods and systems are not satisfactory. On the one hand, claiming a role within a digital signature is relatively simple but does not provide any guarantee to the verifier as to the validity of the claimed role. On the other hand, the process of certifying roles guarantees the validity of the claimed role but involves attribute certificates and Attribute Authorities requiring relatively expensive and complex setup.

### Summary of the invention

It is an object of the invention to provide a method for providing digital signatures including roles or delegated powers, enabling to guarantee the role or delegated power validity while being relatively affordable and easy to set up.

To this end, the cryptographic computer-implemented method according to the invention is characterized by further including the steps of further adding to the signature, for each claimed role and delegated power, at least one reference to a role-stamping authority, the role-stamping authority being capable of confirming the validity of the signer corresponding claimed role or delegated power; sending, to the role stamping authority, at least a hash representation of the digital information, the identity data, and one of the at least one claimed role or delegated power; and receiving, from the role stamping authority, either a signed role-stamp token confirming the validity of the at least one claimed role or delegated power and including a trusted time indication associated with the confirmation, or a failure signal indicating that the at least one claimed role or delegated power is not confirmed.

The problem is solved by the method according to the invention. Indeed, first, the step of sending, from the client-side, involves making a request to a server-side trusted role stamping authority which then returns a signed indication about the validity of the claimed role or delegated power, thus providing a validity guarantee. The signed indication is a signed role-stamp token which may be added to the digital signature either by the role-stamping authority, if the complete signature is sent to the role-stamping authority, or upon reception of the role-stamp token.

Secondly, the method is such that the request may be based on an existing standard scheme and the role stamping authority may be an existing authority, such as a time stamping authority or OCSP responder, provided with additional functionalities. If an existing standardized authority is selected as a role stamping authority, said authority must be capable of providing a trusted time indication. Therefore a time indication relating to the role is provided, so that the returned role-stamp token comprises a role associated with a time stamp. Simply providing extended functionalities to an existing authority for enabling said authority to guarantee the role is therefore possible, while using an existing standardized digital signature is also possible.

An organisation authority entitled to grant and certify roles may easily setup a proper role-stamping authority based on an existing standard, such as a time-stamping protocol. Alternatively a dedicated standard may be created, extending an existing standard or not.

The method thus provides a relatively simple scheme in comparison to a full scheme with Attribute Authorities issuing attribute certificates. The invention provides an efficient role verifying method with a limited number of operation steps and through limited effort. It does not require any dedicated or additional credential medium, such as an additional smart card or USB token, which are expensive.

By realizing that a role should always be associated to a particular moment in time and by providing a stamping authority with both role- and time-stamping authority functionalities, in a synergistic combination, the method according to the invention provides a simple yet secure way to guarantee roles in business electronic transactions and the like.

In addition, identity and role managements within the process of creating a digital signature are well separated in the method according to the invention. While identity management may for instance be based on an eID card PKI infrastructure, role management requires extending the functionalities of a time-stamping authority, for instance an existing standardized time-stamping authority, or any authority capable of providing a time stamp, with role-stamping capabilities. The method advantageously reflects and recognizes the reality within its implementation. It reflects the business reality in that identity management typically originates from the realm of national authorities and regulations well separated from role management, typically controlled by business or professional bodies. It further reflects the time-related reality in that the validity of identity data generally lasts longer than the validity of roles and delegated powers.

When identity credentials are based on an eID card PKI infrastructure, which is not necessarily the case as other infrastructure may be used, the method according to the invention does not require any modification for enabling an eID card holder to create a digital signature with one or more roles or business attributes. It provides the same level of guarantee on the role or business attribute for both the signer and verifier in comparison to the eID card based identity scheme. The method may be based on existing standards.

The invention also relates to a cryptographic computer-implemented method to be carried out as a server-side complement of the above-described method, including the steps of receiving, from a sending party, at least a hash representation of the digital information of a digital signature, identity data of the signature, the identity data corresponding to a signer's identity and the signer being a natural person or legal entity, and at least one claimed role or delegated power; verifying whether the at least one claimed role or delegated power is genuinely associated with the identity data; obtaining a trusted time indication to be associated with the verifying step; sending, to the sending party, either a signed role-stamp token confirming the validity of the at least one claimed role or delegated power and including a trusted time indication associated with the confirmation, or a failure signal indicating that the at least one claimed role or delegated power is not confirmed.

It is yet another object of the invention to provide an information processing apparatus for providing digital signatures including roles or delegated powers, enabling to guarantee the role or delegated power validity while being relatively affordable and easy to set up.

To this end, the cryptographic information processing apparatus according to the invention is characterised by further including further adding means for adding to the signature, for each claimed role and delegated power, at least one reference to a role-stamping authority, the role-stamping authority being capable of confirming the validity of the signer corresponding claimed role or delegated power; sending means for sending, to a role stamping authority, at least a hash representation of the digital information; the identity data, and one of the at least one claimed role or delegated power; and receiving means for receiving, from the role stamping authority, either a signed role-stamp token confirming the validity of the at least one claimed role or delegated power and including a trusted time indication associated with the confirmation, or a failure signal indicating that the at least one claimed role or delegated power is not confirmed.

The invention further relates to an information processing apparatus to be used as a server-side complement of the above-described apparatus, including receiving means for receiving, from a sending party, at least a hash representation of the digital information of a digital signature, identity data of the signature, the identity data corresponding to a signer's identity and the signer being a natural person or legal entity, and at least one claimed role or delegated power; verifying means for verifying whether the at least one claimed role or delegated power is genuinely associated with the identity data; obtaining means for obtaining a trusted time indication to be associated with the output of the verifying means; and sending means for sending, to the sending party, either a signed role-stamp token confirming the validity of the at least one claimed role or delegated power and including a trusted time indication associated with the confirmation, or a failure signal indicating that the at least one claimed role or delegated power is not confirmed.

### Short description of the drawings

These and further aspects of the invention will be explained in greater detail by way of example and with reference to the accompanying drawings in which :
Fig. 1 shows a schematic flowchart of one embodiment of the method according to the invention; and
Fig. 2 shows the XAdES-EPES XML schema definition.

Generally, identical components are denoted by the same reference numerals in the figures.

### Detailed description of preferred embodiments

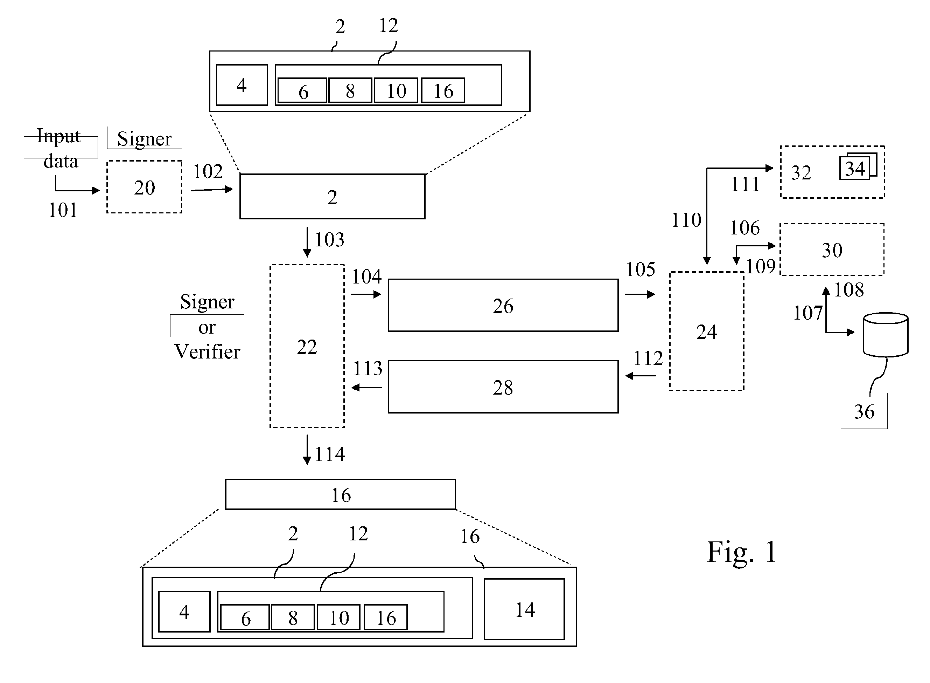

One embodiment of the method according to the invention is described with reference to Fig. 1.

In steps 101 and 102, a signer uses 101 input data to create 102 a digital signature 2 using creating means 20 for creating a signature. The digital signature 2 comprises an inputted document 4 (to be signed), an inputted optional signature policy identifier 6 and associated commitment type, an inputted signing identity certificate 8, a inputted claimed role 10 or delegated power (to be validated by a role stamping authority 24), and other optional inputted properties 16. The signature attributes 12 are signed together with the document 4.

The input data may be included at the outset in an electronic identity card or the like, if the signer is an eID card holder, or an identity based PKI certificate holder. In such case, the creating means 20 for creating a signature, or signature creation apparatus 20, may be managed by a government or official public authority.

The claimed role 10 contains the signer's identity data, which must be consistent with the signer's identity data certified in the signing certificate 8, and a list of claimed roles, associated role-stamping authority and reference authority identifiers, and a role-stamping policy identifier.

The signer uses 101 its private key to create 102 the digital signature 2 on the document 4 and the signed properties 12. Additional unsigned properties may be added to the digital signature 2. This signature 2 may be of any form, such as for instance S/MIME, PKCS#7, XMLDSIG, CMS, AESIG, CAdES, or XAdES.

Then the signer may send 103 the digital signature 2 to a verifier who creates a request 26 to be sent to the role stamping authority 24. This may involve sending the signature 2 after adding the relevant information thereto, using adding means 22 to do so, or sending some elements of the signature 2. Alternatively, the signer may prepare 103 the request 26 instead of sending the signature 2 to a verifier.

The signer, or signer's computer application, or verifier, or verifier's computer application, creates the request 26 from the information collected from the digital signature 2. The request 26 comprises a hash representation of the signed digital information (as required by RFC 3161 which defines the time-stamping protocol), the identity data 8 which may be the signer's certificate, an optional role-stamping policy identifier, the list of claimed roles 10 and associated reference authority identifiers (the reference authority identifiers are not needed however if the role-stamping authority 24 to which the request 26 is sent does not communicate with any reference authority but is a reference authority itself).

The request 26 is based on a time-stamp request (e.g. as defined in RFC 3161 "Internet X.509 Public Key Infrastructure Time-Stamp Protocol (TSP)", ETSI TS 101 861, RFC 3628, ETSI TS 102 023, ISO/IEC 18014-1/2/3) and includes a specific extension related to the claimed role(s) 10 to be validated by the role-stamping authority 24. The signer or verifier may verify the information collected from the digital signature 2 at this stage. This may include verifying whether the signer's identity information in the signed claimed role property is consistent with the signer's identity information found in the signing certificate 8.

The request 26 is sent 104, 105 by the signer or verifier, i.e. the sending party, to the corresponding role-stamping authority 24.

The role-stamping authority 24, which is a server, verifies the request 26 as a conventional time-stamp request but performs an additional check against the claimed roles 10 to be associated to the target entity identity, i.e. the signer's identity data. A "valid request" is defined as a request 26 that can be correctly decoded, is of the form specified as further below, and comes from a supported role-stamping authority client 22. The role-stamping authority 24 is required to satisfy the Time Stamping Authority requirements as stated in RFC3161. In addition, the role-stamping authority 24 is required to include additional information in the time-stamp token, when a role (and time) stamp token 14 is requested 104, 105 by the signer or verifier using the extensions field, but only for the role stamp request extensions that are supported by the role-stamping authority 24. If this is not possible, the role-stamping authority 24 responds with an error message or failure signal (not illustrated in Fig. 1).

The role-stamping server 24 requests 106 confirmation to or use the reference authority 30, which includes verifying means for verifying and validating roles. The reference authority 30 has an access to or is an authentic source.

The reference authority 30 queries 107 an authentic role validation source 36, which may be a database or any type of data storing means, to obtain the validation of the association between the target entity identity data 8 and the claimed role(s) 10. The authentic role validation source 36 provides 108 a response to the reference authority 30.

The reference authority 30 provides 109 the response to the role-stamping server 24. In a different configuration, the role-stamping server 24, the reference authority 30, and the authentic role validation source 36 are combined in one or two entities. They may be controlled and operated by different organisational entities.

Once the role-stamping server 24 receives 109 confirmation of the claimed role(s) 10, it creates the response 28 and signs it with a time-stamp. The response 28 is requested 110 to be timestamped by time stamping means 32 including a time stamping unit 34. The time stamping means 32 send 111 the generated timestamp back to the role-stamping server 24, and the role-stamping server 24 then sends 112, 113 the response 28 to the verifier or signer. The response 28 includes the role-stamp token 14 with a timestamp indication.

The signer or verifier then verifies the role-stamp token 14 and adds it to the digital signature 2 to create 114 the digital signature 16 with an embedded role stamp token 14 (ES-TR). The role-stamp token 14 may however be added by the role-stamping authority 24 to the signature 2, if the signature 2 is sent along with the request 26 to the role-stamping authority 24. In other words, the role-stamp token 14 may be added to the digital signature 2 either on the client- or server-side.

The above-described embodiment relies on time stamping protocols, as defined by RFC3161 and ETSI TS 101 861, and is associated to a PKI based electronic signature based on any digital signature algorithm (e.g. RSA, DSA, Elliptic Curve, or Zero-Knowledge). In such embodiment, the role stamping method is an extension of a time stamping method (see RFC 3161, ETSI TS 101 861, RFC 3628, ETSI TS 102 023, ISO/IEC 18014-1/2/3). The role stamp token 14 is an extended time stamp token which certifies both the time at which the digital signature 2 was time-stamped but also the claimed role 10.

The role-stamping authority 24 may also be any authority capable of providing a trusted time indication or stamp, or adding a trusted time indication or stamp to a digital signature 2.

In one embodiment, the role-stamping authority 24 acts as a dispatcher providing an access to different reference authorities 30, which in turn are able to query one or more authentic role validation sources 36. The request 26 must comprise sufficient information to identify the role-stamping authority 24, the reference authority 30 and the authentic role validation sources 36, so that the claimed role 10 can be properly validated. The person skilled in the art will recognize that any type of tree structure comprising a role-stamping authority 24, one or more reference authorities 30 and one or more associated authentic role validation sources 36 may be used. Additional levels in the tree structure may also be used.

The implementation of the embodiment illustrated on Fig. 1 is now described in more details.

The digital signature 2 may be based on XAdES format. This standard defines XML formats for advanced electronic signatures that remain valid over long periods and comply with Directive 1999/93/EC of the European Parliament and of the Council of 13 December 1999 on a Community framework for electronic signatures, and incorporates additional useful information in common use cases. This includes evidence as to its validity even in case the signer or the verifier later attempts to deny, i.e. repudiate, the validity of the signature. The standard specifies four main forms of XML advanced electronic signatures, namely:
(1) the Basic Electronic Signature (XAdES-BES), built on a XML Signature (XMLDSIG) by incorporating qualifying properties defined in the standard;
(2) the Explicit Policy based Electronic Signature (XAdES-EPES) extending the definition of electronic signature to conform to the identified signature policy; it builds up on a XMLDSIG or BES form by incorporating a signed reference to a signature policy indicating that it must be used for signature validation;
(3) the Electronic Signature with Time Validation Data (XAdES-T) being a signature including an associated trusted time;
(4) the Electronic Signature with Complete Validation Data References (XAdES-C) adding to the XAdES-T the complete references to the CA certificates that have been used to validate the electronic signature up to the signing certificate and the complete references to the revocation data that have been used in the validation of the signer and CA certificates.

As mentioned above, when creating 102 the digital signature 2, the signer may use his PKI based eID card, or any identity based PKI certificate scheme, to electronically sign a document. The signer uses 102 either XAdES-BES or XAdES-EPES signature format and incorporates the "SignerRole" signed property. The signer indicates his claimed role by using a "ClaimedRole" element in the "SignerRole" element as part of the XMLDSIG signed attributes fields (see ETSI TS 101 903 V1.2.2 (2004-04), section 7.2.8, page 37 and 38).

The digital signature 2 may also be based on CAdES format. ETSI TS 101 733 based on CMS electronic signature format (CAdES) uses similar concepts and signed properties definition to enable the signer to add a signed SignerAttribute element. The signer uses his PKI based eID card, or any identity based PKI certificate scheme, to electronically sign the document. The signer uses either CAdES-BES or CAdES-EPES signature format and incorporates the "SignerAttribute" signed attribute. The signer indicates his claimed role by using a "claimedAttribute" field in the "SignerAttribute" attribute as part of the CMS signed attributes fields. This property is described against CMS electronic signature format as follows:

```
 -- Signer Attributes
 id-aa-ets-signerAttr OBJECT IDENTIFIER ::= { iso(1) member-
 body(2)us(840) rsadsi (113549) pkcs (1) pkcs-9 (9) smime (16) id-
 aa(2) 18}
 SignerAttribute ::= SEQUENCE OF CHOICE {
 claimedAttributes [0] ClaimedAttributes,
 certifiedAttributes [1] CertifiedAttributes }
 
 ClaimedAttributes ::= SEQUENCE OF Attribute
 Attribute ::= SEQUENCE {
       attrType OBJECT IDENTIFIER,
       attrValues SET OF AttributeValue }
 AttributeValue ::= ANY
 --
```

The standard defined syntax of "Attribute", types (anyType / attrType) and values (attrValues) may be valuably used to include harmonized and/or normalized identifiers to refer to meaningful roles. For instance:
- Grand Duchy of Luxembourg family of notarial professional roles may be identified by a type identified as 1.3.171.123456 and the various notarial characteristics either as a sub-OID or a language meaningful value (Notary - 1.3.171.123456.1; Clerk - 1.3.171.123456.2; Notary employee - 1.3.171.123456.3, and so on),
- Belgian companies may be identified as a type identifying Belgium as the country and a suffix indicating the company type, while the value may be the unique Belgian company identification number, as an example for a company named "XXXX sa",
   ■ attrType ::= "Harmonized Companies OID"
   ■ attrValues ::= "iso-itu country companies oid scheme"
   **■** AttributeValue ::= (joint-iso-itu-t)2.(country)16.(country-name Belgium) 56. (Companies) x. (Company-Unique-Identifier-XXXX sa)0876866142

Other examples of countries identified using this joint-iso-itu-t scheme are The Netherlands (2.16.528), The United States of America (2.16.840), etc.
- Legal representative function within a company XXXX may be identified by an additional sequence within the claimed attribute:
   ■ Attribute ::= 2.16.56(Belgium).x(Companies), 0876.866.142 (XXXX sa), 2.16.56(Belgium).x(Companies).y(Function in company), 2.16.56.x.y.functionInCompany
   ■ Where functionInCompany ::= {1(CEO), 2(Managing Director), 3 (Administrator), 4(Employee), etc.}

Other schemes may be used, by combining several attribute types (attrTypes), for example one to identify the company, and the other one to identify a role in an organisation, or a delegated power granted to an entity by an organisation, etc.

The BES form satisfies the legal requirements for electronic signatures 2 as defined in the above-mentioned EU Directive. It provides basic authentication and integrity protection.

The BES form is the minimum format for an electronic signature 2 to be generated by the signer. On its own, it does not provide enough information for it to be verified in the longer term. For example, revocation information issued by the relevant certificate status information issuer needs to be available for long term validation.

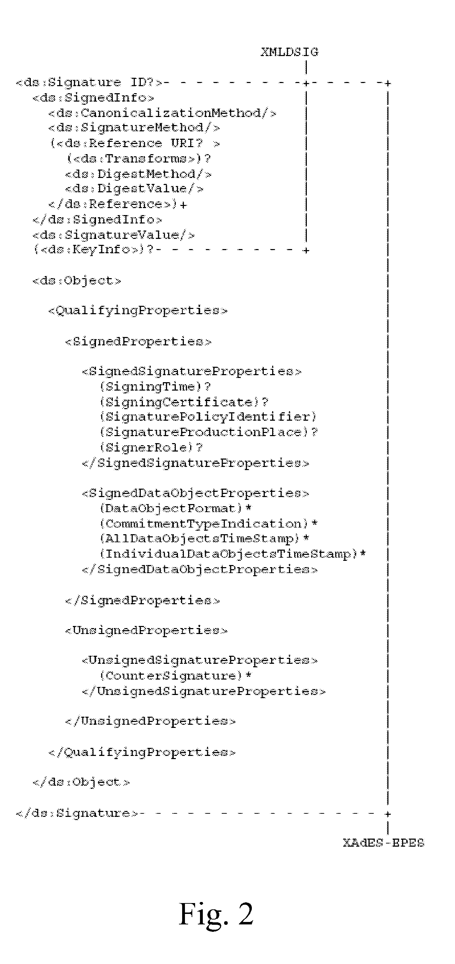

The structure of the XAdES-EPES is created by direct incorporation of the signature policy qualifying information to a XAdES-BES form indicating that a signature policy must be used for signature validation. It may explicitly identify the signature policy. Other properties may be required by the mandated policy. The XAdES-EPES format is illustrated in Fig. 2.

The XAdES ClaimedRole element in the embodiment of the method according to the invention indicates the reference authority that is trusted to provide a guarantee that the claimed role 10 is valid. This enables the signer or verifier to request 104, 105 the signed confirmation of the claimed role 10. To this end, a new type is defined to support such complex type of ClaimedRole, namely a ClaimedRolesWithRefToRoleAuthorityType. One XML definition of this complex type may be:

```
 <xsd:complexType name="ClaimedRolesListType">
 <xsd:sequence>
    <xsd:element name="ClaimedRole"
    type="ClaimedRolesWithRefToRoleAuthorityType"
       max0ccurs="unbounded"/>
 </xsd:sequence>
 </xsd:complexType>
 
 <!-- Start ClaimedRolesWithRefToRoleAuthorityType -->
 <xsd:element name="Any" type="
 ClaimedRolesWithRefToRoleAuthorityType "/>
 <xsd:complexType name=" ClaimedRolesWithRefToRoleAuthorityType
 " mixed="true">
 <xsd:sequence minOccurs="0" maxOccurs="unbounded">
 <xsd:any namespace="##any" processContents="lax"/>
 </xsd:sequence>
 <xsd:anyAttribute namespace="##any"/>
 </xsd:complexType>
 <!-- End ClaimedRolesWithRefToRoleAuthorityType -->
```

Such complex type is used to add to the signature 2 the claimed role 10, and a role-stamping authority 24 identifier capable of providing a signed confirmation of the claimed role 10. As mentioned above, such authority may be a role stamp authority 24 based on the TimeStamping Authority which is capable of adding a signed confirmation of the claimed role 10 in an extended Time Stamp Token called a role stamp token 14. The nature of the role-stamping authority 24, and reference authority 30 if any, may be indicated in the above-mentioned type definition or specific types can be used to indicate said nature.

In another embodiment, the XAdES "SignerRole" element is defined such that it uses a "StampedRole" element. The XAdES "SignerRole" element uses an extended time stamp including the "certification" of the claimed role 10. Using the XAdES format, this embodiment may be detailed as follows: 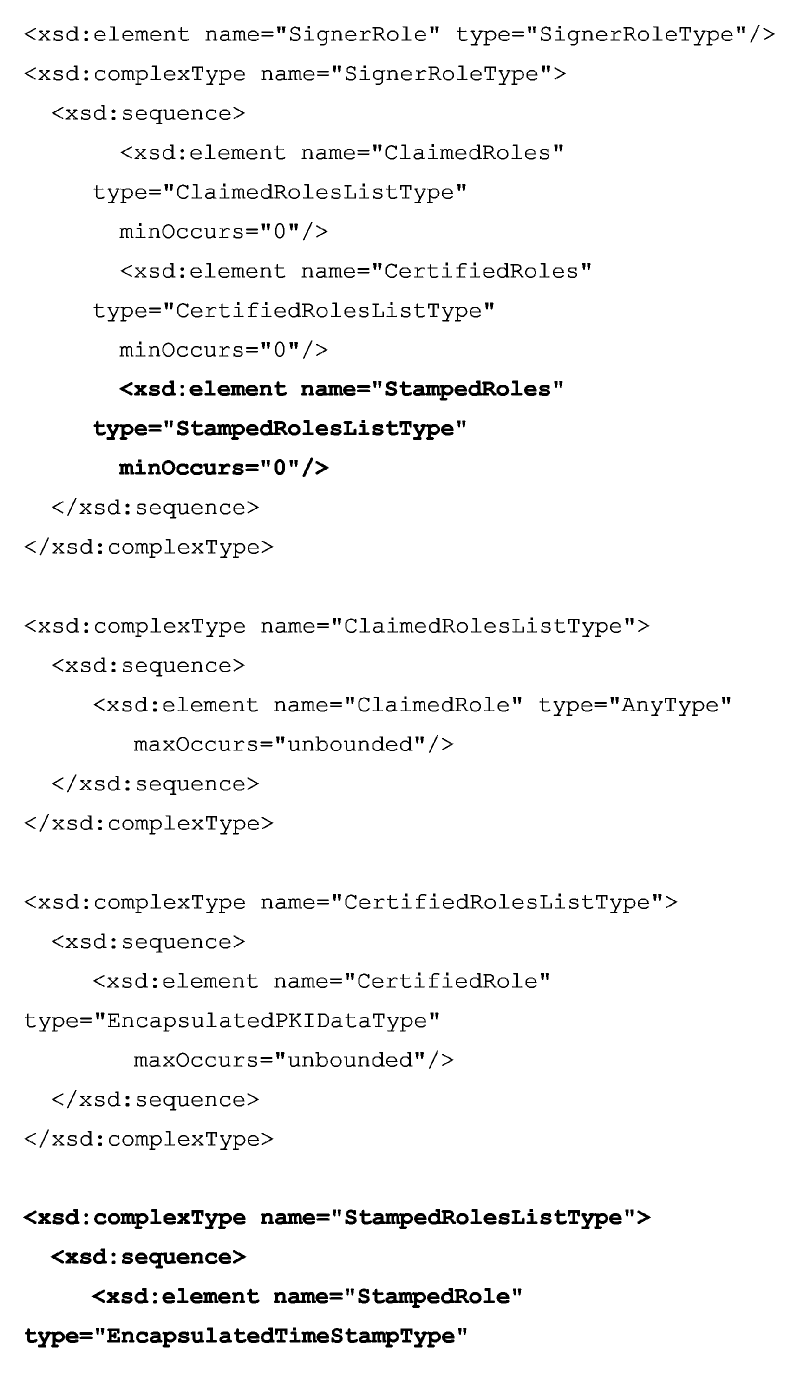 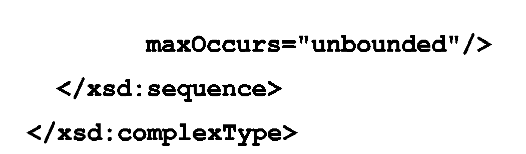 Note: OtherTimeStampType can also be used in place of EncapsulatedTimeStampType.

When using the CAdES format this can be defined as:

```
 -- Signer Attributes
 
 id-aa-ets-signerAttr OBJECT IDENTIFIER ::= { iso(1) member-
 body(2)us(840) rsadsi(113549) pkcs (1) pkcs-9(9) smime(16) id-
 aa(2) 18}
 
 SignerAttribute ::= SEQUENCE OF CHOICE {
 claimedAttributes [0] ClaimedAttributes,
 certifiedAttributes [1] CertifiedAttributes,
 stampedAttributes [2] StampedAttributes }
 
 StampedAttributes ::= RoleStampToken -- as defined on an
 extended version of the TimeStampToken
 
 ClaimedAttributes ::= SEQUENCE OF Attribute
 
 Attribute ::= SEQUENCE {
       attrType OBJECT IDENTIFIER,
       attrValues SET OF AttributeValue }
 
 AttributeValue ::= ANY
 --
```

In one embodiment, the claimed roles 10 are defined according to a standardized OID preferably as defined on a harmonised basis throughout Europe at least. ISO country OIDs, 2.16.<country> may serve as a basis for role name standardization. An alternative for the definition and syntax of these attributes may be the "role syntax" as defined in the RFC 3281.

In one embodiment, requests 26 include the time-stamping policy in order to indicate a role stamping policy as a subset of time-stamping policies. Such role stamping policies are used by the signer and verifier and by the role-stamping authority 24 to provide statements on practices and commitments on using/providing the services related to the issued role-stamp tokens 14. In particular the policies specify the operations to be performed for validating and certifying the claimed role 10 and the guarantees provided by the issuing role stamping authority 24 and its liabilities.

In one embodiment, the role-stamping client 22 requirements are:
- Profile for the format of the request 26
   - Parameters to be supported:
      - The nonce must be supported
      - CertReq must be supported
      - Role-stamping authority extension field is present.
   - Algorithms to be used:
      - The following hash algorithms may be used to hash the information to be time-stamped: SHA-1, MD5, RIPEMD-160.
      - Using either SHA-1 or RIPEMD-160 is recommended.
- Profile for the format of the response 28
   - Parameters to be supported:
      - the accuracy field must be supported and understood,
      - the nonce parameter must be supported,
      - Role-stamping authority extensions are supported and are marked critical
         NOTE: A role-stamping authority 24 may not support ordering hence clients 22 should not depend on the ordering of time-stamps.
      - Algorithms to be supported: SHA-1 with RSA signature algorithm must be supported
      - Key lengths to be supported:
         - For the RSA algorithm, key lengths of 1024 bits must be supported. Key lengths of 2048 bits should be supported.
         - For the DSA algorithm, the larger of the two primes, p and q, shall be at least 1024 bits.

In one embodiment, the role-stamping server 24 requirements are:
- Profile for the format of the request 26
   - Parameters to be supported:
      - The nonce must be supported
      - CertReq must be supported
      - ROSA extension field(s) is present.
   - Algorithms to be used:
      - The following hash algorithms may be used to hash the information to be time-stamped: SHA-1, MD5, RIPEMD-160.
      - Using either SHA-1 or RIPEMD-160 is recommended.
- Profile for the format of the response 28
   - Parameters to be supported:
      - a genTime parameter limited to represent time with one second is required,
      - a minimum accuracy of one second is required,
      - an ordering parameter missing or set to false is required,
      - Role-stamping authority extension is required to be generated,
      - Role-stamping authority extension is critical.
   - Algorithms to be supported: SHA-1 with RSA signature algorithm must be supported
   - Key lengths to be supported:
      - For the RSA algorithm, key lengths of 1024 bits must be supported. Key lengths of 2048 bits should be supported.
      - The signature algorithm with SHA-1 and the RSA encryption algorithm is implemented using the padding and encoding conventions described in PKCS #1 (RFC 3447).
- The name of the issuing role-stamping server 24 contains an appropriate subset of the following attributes (defined in ISO 9594-6 and ITU-T Recommendation X.520):
   - countryName;
   - stateOrProvinceName;
   - organizationName;
   - commonName.
- The countryName, when applicable, identifies the name of the country where the role-stamping authority 24 is established (which is not necessarily the name of the country where the role (time-)stamping unit 30 is located) .
- The stateOrProvinceName is an optional component that identifies a geographical subdivision in which the role-stamping authority 24 is established.
- The organizationName is present. It identifies the role-stamping authority 24 responsible for managing the time-stamping unit 34. That name should be an officially registered name of the role-stamping authority 24.
- The commonName is present. It specifies an identifier for the role (time)-stamping unit 30. Within the role-stamping authority 24, the attribute commonName uniquely identifies the role (time-)stamping unit 30 used.

In one embodiment, the role-stamping authority's functions are:
- to time-stamp a datum to establish evidence indicating that a datum existed before a particular time, and
- to time-stamp (and sign) the confirmation that an identified entity has a specific role or delegated power at a precise trusted time. When combined with digital signature 2 whether used in a non-repudiation or entity authentication, or data origin authentication and data integrity, this may be used to verify that a digital signer's identity has been assigned/granted with a specific role.

In one embodiment, the role-stamping authority 24 makes known to prospective clients 22 the policies it implements to ensure accurate time-stamp generation, and clients 24 use the services of a role-stamping authority 24 only if they are satisfied that these policies meet their needs.

The role-stamping authority 24 signs each time-stamp message with a key reserved specifically for that purpose. A role-stamping authority 24 may have distinct private keys, e.g. to accommodate different policies, different algorithms, different private key sizes or to increase the performance. The corresponding certificate contains only one instance of the extended key usage field extension as defined in RFC2459 Section 4.2.1.13 with KeyPurposeID having value: id-kp-timeStamping. This extension is critical.

The following object identifier identifies the KeyPurposeID having value id-kp-timeStamping:
id-kp-timeStamping OBJECT IDENTIFIER ::= {iso(1) identified-organization(3) dod(6)
internet (1) security(5) mechanisms (5) pkix (7) kp (3) timestamping (8)}

In one embodiment, a role (time-)stamping request is as follows:

```
 -- Role (time-)Stamping request based on RFC3161 time-stamping
 request
 TimeStampReq ::= SEQUENCE {
  version      INTEGER {v1(1) },
  messageImprint      MessageImprint,
                             --a hash algorithm OID and the
 hash value of the data to be time-stamped
  reqPolicy      ROSAPolicyId      OPTIONAL, -
 - mandatory in case of RST request
  nonce      INTEGER      OPTIONAL, --
 recommended
  certReq      BOOLEAN      DEFAULT
 FALSE,
  extensions      [0] IMPLICIT Extensions      OPTIONAL }
```

The version field (currently v1) describes the version of the Time-Stamp request.

The messageImprint field should contain the hash of the datum to be time-stamped. The hash is represented as an octet string. Its length matches the length of the hash value for that algorithm (e.g., 20 bytes for SHA-1 or 16 bytes for MD5).

The reqPolicy field is included and indicates the ROSA policy under which the RoleStampToken should be provided. ROSAPolicyId is defined as follows:
ROSAPolicyId ::= OBJECT IDENTIFIER

The nonce, if included, enables the client to verify the timeliness of the response when no local clock is available. The nonce is a large random number with a high probability that the client 22 generates it only once (e.g., a 64 bit integer). In such a case the same nonce value is included in the response 28, otherwise the response 28 is rejected.

If the certReq field is present and set to true, the role stamping authority's public key certificate that is referenced by the ESSCertID identifier inside a SigningCertificate attribute in the response 28 is provided by the role stamping authority 24 in the certificates field from the SignedData structure in that response 28. This field may also contain other certificates. If the certReq field is missing or if the certReq field is present and set to false then the certificates field from the SignedData structure must not be present in the response 28.

The extensions field is a generic way to add additional information to the request 26 in the future. Extensions are defined in [RFC 3280]:

```
 Extensions ::= SEQUENCE SIZE (1..MAX) OF Extension
 
  Extension ::= SEQUENCE {
       extnID OBJECT IDENTIFIER,
       critical BOOLEAN DEFAULT FALSE,
       extnValue OCTET STRING }
```

These extensions should be used to provide the role-stamping authority 24 with the following information:
- The target entity (e.g. signer) identity identifier, e.g., the Signer's Subject serial number as certified in the Signer's signing certificate,
- The claimed role identifier (or a list of claimed role identifiers)

An example of extension that may be used to require the confirmation that a target entity is associated with a specific role 10 in an organization may be the following:

```
 id-xx-roleInOrganisation OBJECT IDENTIFIER ::= { id-xx nn }
 
 -- This extension should be marked critical
 
 roleInOrganisation ::= SEQUENCE {
     targetEntityIdentifier [0] EntityId MANDATORY,
     targetEntityName [1] GeneralNames OPTIONAL,
     organisationIdentifier [2] OrganisationId MANDATORY,
     organisationName [3] OrganisationName
      OPTIONAL,
     roleInOrganisationIdentifier [4] RoleInOrgId OPTIONAL,
     roleInOrganisationName [5] RoleInOrgName OPTIONAL }
 
  EntityId ::= IA5String
  GeneralNames ::= -- as defined in RFC3280
  OrganisationId ::= IA5String
  OrganisationName ::= Name -- as defined in RFC3280
  RoleInOrgId ::= IA5String
  RoleInOrgName ::= Name -- as defined in RFC3280
```

Many other types of extensions may be defined in order to reflect any type of role or delegated power that may be associated to a target entity.

If an extension, whether marked critical or not, is used by a signer or verifier but is not recognized by a role (time)stamping server 24, the server 24 does not issue a role-stamp token 28 and returns a failure (unacceptedExtension).

The request 26 may or may not identify the requesting party, since this information is not validated by the role-stamping authority 24. When the role-stamping authority 24 requires the identity of the requesting party, other identification or authentication means are used (e.g. CMS encapsulation or TLS authentication as defined in RFC2246).

The role-stamping authority 24 processes the request 26 as any time-stamping request as described in RFC 3161. There is however an additional check performed in compliance with the role-stamping authority policy identified in the request 26. This check relates to the role-stamping authority extension. The role-stamping authority 24 verifies against internal or external authentic resources 30, 36 or information sources that the claimed role 10 information is genuinely associated to the target identity data. Using the above-described example of possible extension, the role-stamping authority 24 verifies that the identified target entity is genuinely associated with the claimed role 10 in the identified organisation. Once the role-stamping authority 24 is convinced that the claimed assertion is correct, and provided that all other verifications linked to the request 26 are successful, then it sends 112 a positive response 28.

The role-stamping authority policy is useful to indicate the rules, practices and security policy that the role-stamping authority 24 uses to issue the role-stamp token 14. The relying parties may then easily determine whether or not to rely on the role-stamp token 14.

The role-stamp token response 28 format is similar to and based on the time-stamp token response format as defined in RFC3161 with in particular the following parameters being supported and implemented:
- a genTime parameter limited to represent time with one second is required,
- a minimum accuracy of one second is required,
- an ordering parameter missing or set to false is required,
- role-stamping authority extension is required to be generated,
- role-stamping authority extension is critical.

All types of transport (including but not limited to the ones described in RFC3161) may be supported and implemented, and at least the role (time-)stamp protocol via HTTP should be supported.

In a further embodiment, to which the illustration of Fig. 1 applies mutatis mutandis, the role-stamping authority 24 is an Online Certificate Status Protocol (OCSP) responder with extended functionalities enabling it to validate roles. In other words, it is a Role and OCSP responder. The role-stamping authority identifier (and optionally the reference authority identifier) is an OCSP Responder identifier associated with the claimed role 10. A validation policy identifier may be added to the signature 2 as well.

The signer or verifier creates 103 the "Role and OCSP" request 26 from information collected from the digital signature 2 as described above. The request 26 is created based on an OCSP request, e.g. as defined in RFC2560, and includes a specific extension related to the claimed role(s) 10 to be validated by the Role and OCSP responder 24, acting as role-stamping authority 24.

The role and OCSP responder server 24 verifies the request 26 in the same manner an OCSP responder does it for a conventional OCSP request. In addition however it checks the claimed roles 10 validity. The role and OCSP responder server 24 requests 106 confirmation to or use a reference authority 30 or role validation apparatus 30, which acts as described above.

Once the role and OCSP responder server 24 receives 109 confirmation on the claimed roles 10, it creates the role and OCSP response 28, i.e. an OCSP response including the role stamp token 14, and has it signed by the OCSP Signing Unit 32. The response 28 is requested to be signed by an OCSP Signing Unit 32 which sends 111 the generated signature back. The role and OCSP responder server 24 then sends 112, 113 the role and OCSP response 28 to the signer or verifier. The signer or verifier then verifies the role and OCSP response 28 and adds the role stamp token 14 of the role and OCSP response 28 to the digital signature 2 to generate the digital signature 16 with an embedded role stamp-token 14. The role-stamp token 14 may also be added by the OCSP responder 28 to the digital signature 2 provided that the complete signature 2 is sent to the OCSP responder 28.

This embodiment is best produced when it extends the CAdES or XAdES electronic signature format with Complete Validation Data Reference (CAdES-C, or XAdES-C) but may be used with any type of signature 0format to which is added a validation data obtained from an authorized role & OCSP responder authority 24 (acting as role-stamping authority) that guarantees in its OCSP extended response 28 the validation of the claimed role 10.

The role and OCSP responder 24 is an OCSP responder authorized by the Certified Authority (CA) issuing the certificate used by the signer to create the digital signature 2.

The role and OCSP request 26 and response 28 syntax may be based on the RFC2560 in terms of syntax, processing performed by the authorized role & OCSP responder authority 24 and extensions included in the request 26 and response 28. The role and OCSP request 26 and response 28 may contain the hash of the digital signature 2 on which the request 26 is based including the signing certificate (identifier). The response 26 may contain the time and confirmation on the claimed role 10.

The disadvantage of this embodiment is that the role and OCSP responder 24 must be an authorised responder delegated by the CA issuing the certificates used by the signer to support the electronic signature. Another disadvantage is that the time is not guaranteed to the same level of guarantee provided by a role-stamping authority 24 based on a time stamping authority implementation.

In one embodiment, the role-stamping authority 24 is a Server-based Certificate Validation Protocol (SCVP) server.

In a further embodiment, the time stamping authority-based role-stamping authority and the OCSP-based role-stamping authority are combined.

In yet a further embodiment, the role-stamping authority 24 is a time-marking authority with extended functionalities.

The method according to the invention adds business attributes with the same level of assurance than citizen identity certified by the eID card or other PKI-based identity scheme.

In one embodiment, the reference authority 30 and the role-stamping authority 24 are one and only one authority, which also means that the reference to the reference authority 30 and the reference to the role-stamping authority 24 are the same. This embodiment is relatively simple.

The method according to the invention may be caused to be performed by a computer program when executed on a computer. A computer program is a set of computer-understandable instructions. By computer, it must be understood that the computer program may be executed on any apparatus comprising at least a processing unit or processor (CPU) and a memory unit.

The computer program may be carried on a carrier, for instance an electrical or magnetic carrier, such as a floppy disk or disk drive, or optical carrier, such as an optical disk.

The invention also relates to the signals 26, 28 sent on a communication network, for instance the Internet, to the role-stamping authority 24 or back to the client side 22.

The means included in the information processing apparatuses according to the invention may be computer-implemented, electrical or electronic means.

It will be appreciated by persons skilled in the art that the present invention is not limited by what has been particularly shown and described hereinabove. The invention resides in each and every novel characteristic feature and each and every combination of characteristic features. Reference numerals in the claims do not limit their protective scope.

## Claims

1. Cryptographic computer-implemented method for processing a digital signature (2), including the step of
adding (102) to a digital signature (2) of digital information, wherein the signature (2) is signed by a natural person or legal entity, i.e. the signer, and includes identity data (8) corresponding to the signer identity,
at least one claimed role (10) or delegated power of the signer,
**characterized by** further including the steps of
further adding to the signature (2),
for each claimed role (10) and delegated power, at least one reference to a role-stamping authority (24), the role-stamping authority (24) being capable of confirming the validity of the signer corresponding claimed role (10) or delegated power;
sending (104, 105), to the role stamping authority (24), at least
a hash representation of the digital information,
the identity data (8), and
one of the at least one claimed role (10) or delegated power;
and
receiving (112, 113), from the role stamping authority (24), either a signed role-stamp token (14) confirming the validity of the at least one claimed role (10) or delegated power and including a trusted time indication associated with the confirmation, or a failure signal indicating that the at least one claimed role (10) or delegated power is not confirmed.

2. Method of claim 1, wherein each claimed role (10) and delegated power is defined according to a unique object identifier (OID) or according to the RFC 3281 role syntax.

3. Method of claim 1 or 2, wherein the step of further adding further includes,
for each claimed role (10) and delegated power, adding at least one reference to a reference authority (30), the role-stamping authority (24) being capable, through the reference authority (30), of confirming the validity of the corresponding claimed role (10) or delegated power, and
the step of sending (104, 105) further includes
sending one of the at least one reference to a reference authority (30).

4. Method according to any one of claims 1 to 3, wherein the role stamping authority (24) is a Time Stamping Authority as defined in RFC3161 and ETSI TS 101 861, with extended functionalities, and the role stamp token (14) is an extended time stamp token.

5. Method according to any one of claims 1 to 3, wherein the role stamping authority (24) is an Online Certificate Status Protocol (OCSP) responder, with extended functionalities.

6. Cryptographic computer-implemented method to be carried out as a server-side complement of the method according to any one of the preceding claims, including the steps of
receiving (104, 105), from a sending party, at least
a hash representation of the digital information of a digital signature (2),
identity data (8) of the signature (2), the identity data (8) corresponding to a signer's identity and the signer being a natural person or legal entity, and
at least one claimed role (10) or delegated power;
verifying whether the at least one claimed role (10) or delegated power is genuinely associated with the identity data (8);
obtaining a trusted time indication to be associated with the verifying step;
sending, to the sending party, either a signed role-stamp token (14) confirming the validity of the at least one claimed role (10) or delegated power and including a trusted time indication associated with the confirmation, or a failure signal indicating that the at least one claimed role (10) or delegated power is not confirmed.

7. Computer program comprising program instructions for causing a computer to perform the method according to any one of the preceding claims.

8. Computer program according to claim 7, embodied on a computer-readable storage medium, stored on a record medium, embodied in a read-only memory, or embodied on an electrical carrier signal.

9. Computer containing the computer program according to claim 7 or 8.

10. Carrier having thereon a computer program according to claim 7 or 8.

11. Carrier according to claim 10, wherein the carrier is an electrical or optical carrier.

12. Cryptographic signal (26) produced and sent (104, 105) on a network when carrying out the method according to any one of claims 1 to 5, comprising data representing at least
a hash representation of the digital information of a digital signature (2),
identity data (8) of the signature (2), the identity data (8) corresponding to a signer's identity and the signer being a natural person or legal entity, and
at least one claimed role (10) or delegated power.

13. Cryptographic signal (26) produced and sent (112, 113) on a network when carrying out the method of claim 6, comprising data representing at least a signed role-stamp token (14) confirming the validity of at least one claimed role (10) or delegated power and including a trusted time indication associated with the confirmation.

14. Cryptographic information processing apparatus for processing a digital signature (2), including
adding means (20) for adding to a digital signature (2) of digital information, wherein the signature (2) is signed by a natural person or legal entity, i.e. the signer, and includes identity data (8) corresponding to the signer identity,
at least one claimed role (10) or delegated power of the signer,
**characterized by** further including
further adding means (22) for adding to the signature,
for each claimed role (10) and delegated power, at least one reference to a role-stamping authority (24), the role-stamping authority (24) being capable of confirming the validity of the signer
corresponding claimed role (10) or delegated power; sending means (22) for sending, to a role stamping authority (24), at least
a hash representation of the digital information;
the identity data (8), and
one of the at least one claimed role (10) or delegated power;
and
receiving means (22) for receiving, from the role stamping authority (24), either a signed role-stamp token (14) confirming the validity of the at least one claimed role (10) or delegated power and including a trusted time indication associated with the confirmation, or a failure signal indicating that the at least one claimed role (10) or delegated power is not confirmed.

15. Cryptographic information processing apparatus to be used as a server-side complement of the apparatus according to claim 14, including
receiving means (24) for receiving (104, 105), from a sending party, at least
a hash representation of the digital information of a digital signature (2),
identity data (8) of the signature (2), the identity data (8) corresponding to a signer's identity and the signer being a natural person or legal entity, and
at least one claimed role (10) or delegated power;
verifying means for verifying whether the at least one claimed role (10) or delegated power is genuinely associated with the identity data (8);
obtaining means for obtaining a trusted time indication to be associated with the output of the verifying means; and
sending means (24) for sending (112, 113), to the sending party, either a signed role-stamp token (14) confirming the validity of the at least one claimed role (10) or delegated power and including a trusted time indication associated with the confirmation, or a failure signal indicating that the at least one claimed role (10) or delegated power is not confirmed.
